# EUROPEAN PATENT APPLICATION

(11) **EP 2 446 990 A1**
(43) Date of publication of application: **02.05.2012**
(21) Application number: 10792014.2
(22) Date of filing: 17.06.2010
(51) Int. Cl.: B23B 27/22

(54) **CUTTING INSERT**

(30) Priority: 24.06.2009 JP 2009149597
(71) Applicant: Tungaloy Corporation, Iwaki-shi Fukushima 970-1144 (JP)
(72) Inventor: YAMAGUCHI Takashi, Iwaki-shi Fukushima 970-1144 (JP)
(74) Representative: Vossius & Partner
(86) International application number: PCT/JP2010/060286
(87) International publication number: WO 2010/150696

(57) **Abstract**

There is provided a cutting insert comprising at least one cutting edge (5), a rake face (2) extending from the cutting edge (5), a flank (3) intersecting with the rake face (2) by having the cutting edge (5) therebetween, a concave portion (6) recessed downward of the rake face (2) at the backward of the rake face (2) as viewed from the cutting edge (5), and at least one projection (7) projecting upward from a bottom face (6a) of the concave portion (6), wherein an entirety of the projection is positioned under an extension surface of the rake face (2), and at least a part of a top face of the projection is away from an extension surface of the rake face as it goes away from the cutting edge.

## Description

### Technical Field

The present invention relates to a cutting insert attached to a tip-replacement type cutting tool.

### Background Art

PTL 1 discloses a throw-away tip (that is, a cutting insert) equipped with a chip breaker portion. This throw-away tip is provided with the chip breaker portion on a rake face adjacent to a cutting edge. The chip breaker portion includes a plurality of concave portions and projections extending in a direction intersecting with the cutting edge. The concave portions and the projections are arranged alternately in a direction abreast of the cutting edge. Surfaces of the concave portions and the projections in the chip breaker portion are formed of concave and convex curves smoothly connected with each other in a cross section abreast of the cutting edge.

In a case of using the throw-away tip for deep cutting, chips produced by the cutting edge collide with the chip breaker portion and thereby deformed so that they have gradual concave and convex curves in its width direction by curves formed of a cross section of surfaces of the projection and the concave portion. Since concavity and convexity of the cutting chip are engaged with those of the surface of the chip breaker portion, the outflow direction of the cutting chip is forced to be stable. On the other hand, since a configuration of the thick cutting chip produced by deep cutting does not completely correspond to the concave and convex configuration of the chip breaker portion to ensure a gap between a groove bottom of the concave portion and the cutting chip, a reduction in contacting area causes an increase of the resistance and generation of friction heat to be suppressed.

### Citation List

### Patent Literature

PTL 1: Japanese Patent Application Laid-Open No. 2002-254214

However, in the throw-away tip described in PTL1, when the cutting chip produced by the cutting edge is deformed by the chip breaker portion, a deformation resistance of the cutting chip to be applied to the chip breaker portion becomes large, creating a possibility that large vibration or chatter is generated in the throw-away tip or the cutting tool body. Particularly in the deep cutting, since a large deformation resistance is generated because of forcing the thick cutting chip to be deformed, there possibly occurs a problem of deterioration of cutting precision or damages of the throw-away tip and the cutting tool body. In addition, the gap is ensured between the groove bottom of the concave portion and the cutting chip to reduce the contacting area, but on the other hand, since contacting regions with the chips concentrate on the projection, abrasion of the projection is accelerated, thus creating the possibility that the function of stabilizing the outflow direction of the cutting chip quickly disappears.

The present invention is made for solving the aforementioned problems, and an object of the present invention is to suppress a deformation resistance of cutting chips.

### Summary of Invention

In order to solve the above problems, the present invention provides a cutting insert comprising:
at least one cutting edge;
a rake face extending from the cutting edge;
a concave portion positioned adjacent to and backward of the rake face as viewed from the cutting edge; and
at least one projection projecting from a bottom face of the concave portion, wherein
an entirety of the projection is positioned closer to the bottom face of the concave portion than a surface formed by extending the rake face toward the concave portion,
at least a part of a top face of the projection is away from an extended surface of the rake face as it goes away from the cutting edge.

According to the above construction, the cutting chip produced by the cutting edge flows toward the concave portion on the rake face, passes an intersection portion between the rake face and the concave portion, and thereafter, flows into the concave portion. The cutting chip flown into the concave portion makes contact with a part of the top face of the projection proj ecting upward from the bottom face of the concave portion. Since flow of the cutting chip having made contact with the projection is restricted by a part of the top face of the projection, the outflow direction of the cutting chip is kept to be in a constant direction. Further, since the entirety of the projection does not intersect with the extension surface of the rake face and is arranged downward of the extension surface, and also since at least a part of the top face of the projection is away from the extension surface of the rake face as it goes away from the cutting edge, an impact to be generated upon collision of the cutting chip is suppressed. Therefore, the deformation resistance of the cutting chip can be suppressed, thereby suppressing the vibration or chatter. In addition, the abrasion of the projection in a region making contact with the cutting chip can be suppressed to maintain the function of stabilizing the outflow direction of the cutting chip for a long period of time.

Preferably the concave portion extends abreast of the cutting edge and a plurality of the projections are arranged over a substantially entire length of the concave portion along an extending direction of the concave portion.

According to this construction, since the concave portion extends abreast of the cutting edge and a plurality of the projections are positioned over a substantially entire length of the concave portion along an extending direction of the concave portion, the function of maintaining the outflow direction of the cutting chip to be in a constant direction, the function of preventing the deformation resistance of the cutting chip from excessively increasing, and the function of preventing a strength reduction of the cutting edge are achieved over an entire region of the cutting edge. Therefore, a desired effect can be obtained regardless of a size of cut

A part of the projection from an end portion in the insert outside direction to an intermediate portion thereof in a cross section intersecting with the cutting edge may approach the extension surface of the rake face as it goes away from the cutting edge.

Preferably in a cross section abreast of the cutting edge, the projection has the top face forming a convex curve toward an upward side.

In a cross section abreast of the cutting edge, in other words, along the width direction of the cutting chip, the projection has the top face forming the convex curve toward an upward side, thereby deforming the cutting chip to be in a convex shape in the width direction. Therefore, the outflow direction of the cutting chip can be further stabilized. Further, since the top face of the projection forms the convex curve, the gaps between the groove bottoms of the projections and the chips are ensured to reduce the contact resistance.

Preferably as viewed from a direction opposing the rake face, a length of the projection in a direction intersecting with the cutting edge is larger than a width of the projection in a direction abreast of the cutting edge.

According to this construction, the projection is formed to be longer in the flowing direction of the cutting chip. Therefore, the flow direction of the cutting chip can be more appropriately restricted. On the other hand, since the width of the projection in a direction abreast of the cutting edge is small, an increase in deformation resistance of the cutting chip can be suppressed to maintain the function of suppressing vibration or chatter. Further, since the projection is formed to be longer in a direction intersecting with the cutting edge to act as a rib reinforcing the concave portion, a reduction in strength of the cutting edge can be suppressed.

Preferably the cutting insert is provided with a projecting wall face projecting upward over a top portion of the projection at the backward of the concave portion as viewed from the cutting edge.

According to this construction, since the cutting chip collides with the projecting wall face to be curled or broken, the cutting chip can be appropriately removed.

Preferably the at least one projection is formed in a portion of the concave portion adjacent to a nose.

According to the present invention, the deformation resistance of the produced cutting chip can be suppressed.

In addition, according to the present invention, it is possible to suppress abrasion of the breaker projection and maintain the function of keeping the outflow direction of the cutting chip to be in a constant direction for a long period of time.

### Brief Description of Drawings

[Fig. 1] Fig. 1 is a front view of a cutting insert according to an embodiment of the present invention;
[Fig. 2] Fig. 2 is a bottom view of the cutting insert shown in Fig. 1;
[Fig. 3] Fig. 3 is an enlarged front view of a corner portion of the cutting insert shown in Fig. 1;
[Fig. 4] Fig. 4 is an enlarged view of a cross section (cross section taken on lines IV - IV) vertical to a cutting edge of the cutting insert shown in Fig. 1;
[Fig. 5A] Fig. 5A is an enlarged view of a cross section vertical to a cutting edge of a cutting insert according to a different embodiment of the present invention; and
[Fig. 5B] Fig. 5B is an enlarged view of a cross section vertical to a cutting edge of a cutting insert according to a further different embodiment of the present invention.

### Description of Embodiments

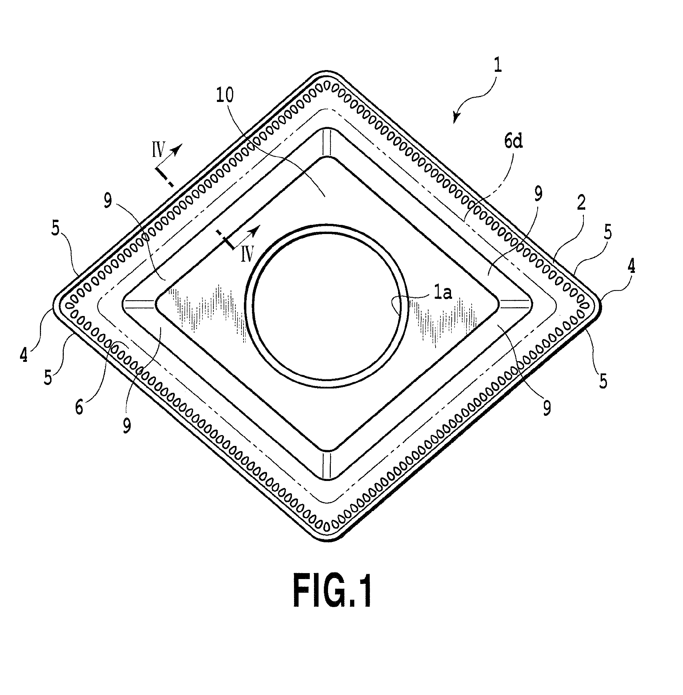

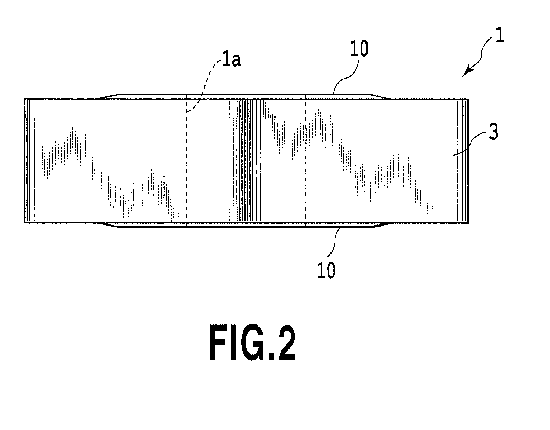

Hereinafter, an explanation will be made of a cutting insert according to an embodiment of the present invention with reference to the drawings. The cutting insert is provided with an insert body 1 formed in a substantially lozenge plate shape as shown in Fig. 1 and Fig. 2. One of two opposing lozenge faces in the insert body 1 is a rake face 2 and the other is a seating face which is seated on a tool body of a cutting tool. Side faces extending between the rake face 2 and the seating face are flanks 3. Each of the flanks is intersected generally at right angles to the two opposing lozenge faces and is a so-called negative type face having a flank angle of 0 degree. A side ridge portion of the lozenge face acting as the rake face 2 is a straight cutting edge 5 formed in a substantially straight line. A ridge line of a corner portion having a sharp angle of the lozenge face is a nose 4 which is a cutting edge formed in a substantially arc shape. In the following explanation, the nose 4 and the straight cutting edge 5 are called cutting edges 4 and 5 as a whole. In the cutting insert, both of the opposing lozenge faces are selectively used as a rake face 2, and thereby both of the lozenge faces can be used. The configuration of the insert body 1 is not only the lozenge, but also may be changed into a substantial polygon such as a square, a rectangle, a parallelogram, a triangle or a hexagon, and a substantially round shape. At least the cutting edges 4 and 5, the rake face 2, and the flanks 3 each are made of a hard alloy such as cemented carbide, coated cemented carbide, cermet and ceramic, or an ultra-high pressure sintered compact such as a diamond sintered compact and a cubic boron nitride sintered compact.

Boss faces 10 to be seated on a tool body (not shown) are respectively formed in the central portions of the two lozenge faces in the insert body 1 opposing in the thickness direction thereof. The boss faces 10 each are a lozenge smaller than a lozenge face that forms a contour of the insert body 1 and substantially flat. In addition, each of the boss faces 10 is formed in a slightly higher position in the thickness direction than the cutting edges 4 and 5.

A mount bore 1a formed of a substantially circular bore penetrating through the insert body 1 in the thickness direction is formed in the center portion of the lozenge face. The cutting insert is removably fixed to an insert mount seat provided in the cutting tool body. The fixation of the cutting insert to the cutting tool body is made in such a manner that the boss face 10 is seated on a bottom face of the insert mount seat, at least one side face is made to be in contact with a wall face of the insert mount seat, and a lever or a pin as clamping means equipped in the cutting tool body is engaged to an inner peripheral face of the mount bore 1a of the insert.

The rake face 2 adjacent to the cutting edges 4 and 5 is a curved face gradually inclined toward the center in the thickness direction of the insert (hereinafter, called downward, and the front face side is called upward) as it goes away from the cutting edges 4 and 5, or a combination of a substantially flat face and the curved face. In the present embodiment, the rake face adjacent to the straight cutting edge 5 is flat and the rake face adjacent to the nose 4 is a conical curved surface. A rake angle, which is an inclination angle of the rake face 2, is set to a positive value, for example, a range of more than 0° to 30° or less, and is set to 10° in the present embodiment. Not limited to this, the rake face 2 may be an inclined surface inclined to project upward as it goes away from the cutting edges 4 and 5, or may be a flat plane extending horizontally. In addition, the rake face 2 is not limited to the flat plane, but may be a curved surface to be formed in a convex shape toward either one of downward and upward directions. Alternatively the cutting edges 4 and 5 may be connected via a land (not shown) to the rake face 2. The land is formed of a flat face along the cutting edges 4 and 5 and preferably has a width of approximately 0.02mm to 1.0mm in a direction vertical to the cutting edges 4 and 5. The land is selected from a negative land extending horizontally in a cross section vertical to the cutting edges 4 and 5, or a positive land formed of an inclined plane inclined downward as it goes away from the cutting edges 4 and 5. An inclined angle of the positive land is set to a range of, for example, more than 0° and 30° or less.

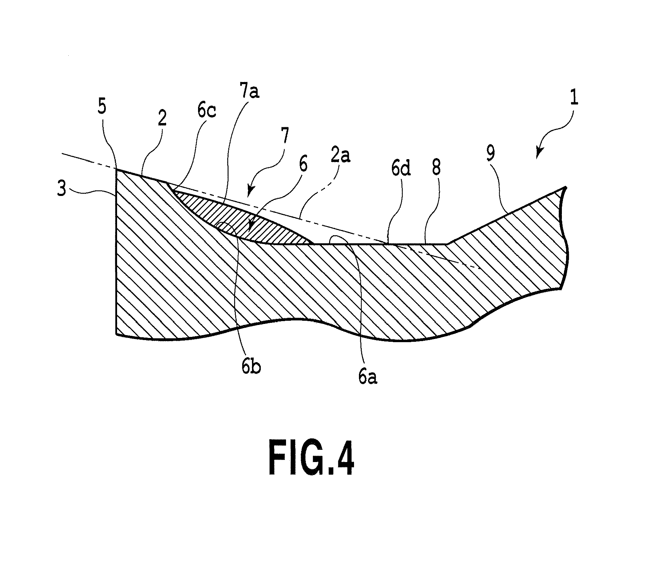

As viewed in a direction opposing the rake face 2 as shown in Fig. 1, a concave portion 6 extending along the cutting edges 4 and 5 is adjacent to an inner periphery of the rake face 2 and has a circular shape including corner radius portions to make one round without disconnection. As shown in Fig. 4 (cross section intersected at right angles to the cutting edges 4 and 5), the concave portion 6 is connected to an end portion in an inside which is opposite to an end portion of the rake face 2 connecting to the cutting edges 4 and 5, and is recessed downward of an extension surface 2a of the rake face 2. Specifically, the concave portion 6 includes a downward inclined face 6b recessed downward from the end portion in the inside of the rake face 2 described above and having a concave curved surface shape, and a bottom face 6a extending substantially horizontally toward an inside (a direction toward the boss face 10) from a bottom end portion of the downward inclined face 6b. Therefore, the concave portion 6 is positioned lower than the extension surface 2a of the rake face 2. An intersection line between the bottom face 6a of the concave portion and the extension surface 2a of the rake face 2 is an inside end portion 6d of the concave portion 6. An intermediate face 8 formed of a horizontal flat plane extending from the bottom face 6a of the concave portion is present in the inside (a direction toward the boss face 10) of the inside end portion 6d of the concave portion 6. The inside end portion of the intermediate face 8 is connected to a projecting wall face 9 to be described later.

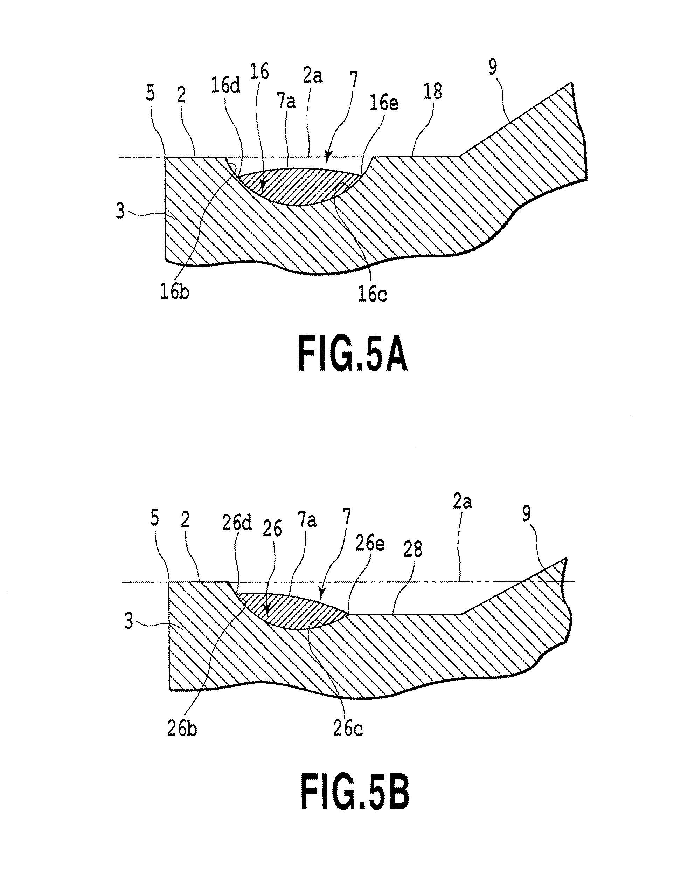

The construction of the concave portion may be a concave groove shape as exemplified in Fig. 5A and Fig. 5B instead of the one mentioned above. Specifically, concave portions 16 and 26 are formed in a concave groove shape to smoothly connect downward inclined faces 16b and 26b each having a concave curved surface shape recessed downward from outside end portions thereof and uprising wall faces 16c and 26c each having a concave curved surface shape rising upward from the inside end portions of the downward inclined faces 16b and 26b. In this case, intermediate faces 18 and 28 extending horizontally toward the inside are formed from top end portions of the rising wall faces 16c and 26c to the insides of the insert, and projecting wall faces 9 to be described later are formed toward the inward from the inside end portions of the intermediate faces 18 and 28. While not shown, the projecting wall faces 9 may be connected directly to the inside end portions of the concave portions 16 and 26 by omitting the intermediate faces 18 and 28.

The concave portions 6, 16 and 26 each are preferably adjacent to the inner periphery of the rake face 2 and formed in a circular shape to make one round without disconnection, but may be formed in a range corresponding to at least regions of the cutting edges 4 and 5 making contact with a workpiece material. For example, the concave portions 6, 16 and 26 each may be formed in a limited manner only in the inside of the rake face 2 extending from the nose 4 or only in the inside of the rake face 2 extending from the nose 4 and a part of the straight cutting edge 5 adjacent to the nose 4 (not shown). Alternatively in a case where the concave portions 6, 16 and 26 each are provided circularly adjacent to the inner periphery of the rake face 4 along the cutting edges 4 and 5, the concave portions 6, 16 and 26 each may be constructed of a plurality of concave portions which are separated and independent from each other in a direction along the cutting edges 4 and 5 (not shown).

In Fig. 4 (cross section intersecting at right angles to the cutting edges 4 and 5), a top face 7a of the projection 7 intersects the concave portion 6 in a position closer to the center side in the thickness direction of the insert than the top end portion of the downward inclined face 6b, extends toward the inward and downward of the insert from the intersection position, is gradually curved upward in a convex shape, and intersects the bottom face 6a of the concave portion 6. The top face 7a of the projection 7 is in a position equal to or higher than the downward inclined face 6b and the bottom face 6a of the concave portion, and in a position equal to or lower than the virtual extension surface 2a of the rake face 2 not to project upward over the extension surface 2a.

In a case of drawing the extension surface 2a of the rake face 2 in a cross section vertical to the cutting edges 4 and 5 and in a case where the rake face 2 is formed of a flat horizontal plane or an inclined plane, the rake face 2 formed in a straight shape in the cross section may be extended as it is. On the other hand, in a case where the rake face 2 is constructed of a curved surface to be in a convex shape toward any one of the downward and upward directions, a tangential line of the rake face 2 at the inside end of the rake face 2, that is, an intersection portion with the downward inclined face 6b of the concave portion 6, may be formed as a contour of the extension surface 2a. However, in a case where the rake face 2 is constructed of a curved surface to be in a convex shape in the upward direction, the cutting chip has a stronger tendency to be away upward from the rake face 2 as it flows out (moves away from the cutting edges 4 and 5). This tendency becomes even stronger as a curvature of the curve plane in the convex shape is larger. Therefore, in a case where the tangential line of the rake face 2 in the intersection portion in a cross section vertical to the cutting edges 4 and 5 is inclined remarkably downward to a tangential line of the rake face 2 at the position of the cutting edges 4 and 5, specifically in a case where an angle between both tangential lines is 15° or more, it is preferable that a straight line passing the intersection portion and the cutting edges 4 and 5 is defined as a contour of the extension surface 2a of the rake face in order to increase the possibility of contact of the cutting chip with the top face of the convex portion.

Further, a region of the top face 7a of the projection 7 which is closer to the outside end portion than the intermediate portion of the top face 7a, that is, a region in the side of the cutting edges 4 and 5, is formed of a convex curved surface which gradually inclines nearer to an inclination of the extension surface 2a as it goes toward the inward and upward sides, and on the other hand, a region thereof which is closer to the inside end portion than the intermediate portion is formed in a convex curved surface to be gradually away from the extension surface 2a as it goes toward the inward side. In other words, at least a part of the top face 7a of the projection 7, particularly a region thereof downstream of a contact point between the cutting chip and the projection 7, is away from the extension surface 2a of the rake face 2 as it goes away from the cutting edges 4 and 5.

In addition, the top face 7a of the projection 7 is formed of a curved surface forming a convex curve toward the upward side as viewed in a cross section abreast of the cutting edge 4 which is the nose, and in a cross section in parallel with the straight cutting edge 5. Not limited to this, the top face 7a of the projection 7 may be shaped to project upward in a cross section in parallel with the cutting edges 4 and 5, and, for example, may be possibly changed into a substantially reverse V-letter shape, a substantially isosceles trapezoid, and a substantially reverse W-letter shape with two top portions.

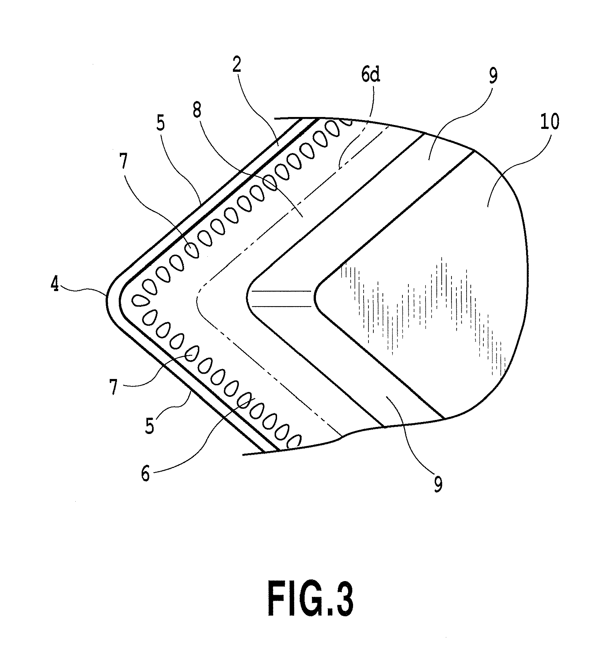

As shown in Fig. 1 and Fig. 3, the projection 7 extends to be longer in a direction vertical to the cutting edges 4 and 5 as viewed in a direction opposing the rake face 2, and is a substantially elliptical body having a long axis in a direction vertical to the cutting edges 4 and 5 and a short axis in a direction in parallel with the cutting edges 4 and 5. The configuration of the projection 7 is not limited to the substantially elliptical body, and may be possibly changed into a substantially spherical shape, a substantially triangular pyramid, and a substantially quadrangular pyramid a bottom face of which is a rectangle, a trapezoid, a parallelogram or the like. Further, a plurality of the projections 7 are arranged in parallel by equal intervals over an entire length of an extending direction of the concave portion 6 including the nose 4 along the cutting edges 4 and 5.

In addition, the projecting wall face 9 is formed inside of the concave portion 6 (backward of the concave portion 6 as viewed from the cutting edges 4 and 5) as viewed in a cross section vertical to the cutting edges 4 and 5. The projecting wall face 9 gradually projects upward as it goes away from the cutting edges 4 and 5. In the present embodiment, the projecting wall face 9 is connected to the inside end portion of the intermediate face 8 provided inside of the bottom face 6a of the concave portion, and forms an inclined plane projecting gradually upward as it goes inward from the inside end portion. The projecting wall face 9 is not limited to a flat inclined surface having a constant inclination, but may be constructed of a curved surface to be in a convex shape or in a concave shape toward the upward side and the cutting edges 4 and 5. The concave portion 6 and the projecting wall face 9 may be directly connected or may be connected via the intermediate face 8 formed of the flat plane or the curved surface. In a case where the intermediate face 8 is provided, the intermediate face 8 is preferably provided in a position equal to or lower than the projecting wall face 9 for appropriately forcing the cutting chip to collide with the projecting wall face 9 without interruption of the outflow of the cutting chip. The inside end portion of the projecting wall face 9 is connected to the boss face 10 formed in the center of the insert body 1. It should be noted that the projecting wall face 9 may be omitted.

The cutting insert explained as above is seated at one lozenge face on the bottom face of the insert mount seat provided in the cutting tool body. In addition, at least one of the side faces connected to the straight cutting edge 5 which is not involved in cutting is in contact with the wall face of the insert mount seat, and the cutting insert is fixed by a lever or a pin as clamping means equipped in the cutting tool body. Another lozenge face is used as the rake face 2.

The cutting insert is given a feed, for example, in a direction parallel with a rotation central line of a workpiece material to cut an outer periphery of the workpiece material. In this case, the lateral cutting edge and a part of the nose 4 adjacent to the lateral cutting edge make contact with the workpiece material over entire cutting in a direction vertical to the rotation central line for cutting primarily. A portion of the nose 4 as a front cutting edge is a portion forming a work face of the workpiece material and is in slight contact with the workpiece material or slightly cuts the workpiece material.

In the cutting insert as explained above, chips generated by the straight cutting edge 5 as the lateral cutting edge and a part of the nose 4 adjacent to the cutting edge 5 flow on the rake face 2 toward the concave portion 6, and go away from the rake face 2 in the intersection portion between the rake face 2 and the concave portion 6 to flow into the concave portion 6. The chips flown into the concave portion 6 make contact with a part of the top face 7a of the projection 7 projecting upward from the bottom face 6a of the concave portion. The flow of chips having contacted a part of the top face 7a of the projection 7 is restricted by the top face 7a to keep the outflow direction to be in a constant direction.

In a cross section in a direction vertical to the cutting edges 4 and 5, the top face 7a of the projection 7 extends inward and downward from the outside end portion intersecting with the concave portion 6 at a position slightly lower than the top end portion of the downward inclined face 6b of the concave portion 6, is gradually curved upward in a convex shape, and reaches the inside end portion intersecting with the bottom face 6a of the concave portion 6. The top face 7a of the projection 7 is at a position higher than the downward inclined face 6b and the bottom face 6a of the concave portion 6, and in a position equal to or lower than the extension surface 2a of the rake face 2, and does not project upward over the extension surface 2a. In addition, at least a part of the top face 7a of the projection 7, particularly a region thereof downstream of the contact point between the chip and the projection 7 is away from the extension surface of the rake face as it goes away from the cutting edges. Therefore, after a chip passes the rake face 2, it goes down from the extension surface 2a of the rake face 2 and gradually approaches and makes contact with the top face 7a of the proj ection 7. As a result, compared to the conventional cutting insert, an impact generated upon collision of the chip can be suppressed to suppress the deformation resistance of the chip. In addition, abrasion of the projection 7 can be suppressed to maintain the function of keeping the outflow direction of the chip to be in a constant direction for a long period of time. These functions are remarkably effective for deep cutting in which the deformation resistance of the chip has a tendency of increasing. In addition, since heat generation is suppressed by suppressing the friction in the projection 7, these functions are effective for materials such heat resistant alloy and ultra-heat resistant alloy in which the heat generation is remarkable at cutting, and for materials having a high strength at a high temperature.

A region of the top face 7a of the projection closer to the outside end portion than the intermediate portion thereof is formed in a convex curved surface, and is constructed in such a manner as to be gradually approaching the extension surface 2a of the rake face 2 as it is away from the cutting edges 4 and 5 to go inward. Therefore, since the outflow direction of the chip passing the rake face 2 and the tangential direction of the curved surface as the top face 7a of the projection are nearly in parallel with each other, the top face 7a of the projection makes gradual contact with the chip. Therefore, remarkable deformation of the cutting chip can be suppressed. On the other hand, a region of the projection 7 in the side of the inside end portion is formed in a convex curve and is constructed such that, at least a region thereof downstream of the a contact point between the cutting chip and the projection 7 is gradually away from the extension surface 2a of the rake face 2 as it is away from the cutting edges 4 and 5 to go inward, and an inclination of the surface tangential line is larger than that of the extension surface 2a. In consequence, since the chip is quickly away from the top face 7a of the projection 7, the remarkable deformation of the cutting chip can be suppressed. As a result of these factors, the vibration and chatter due to the deformation resistance of the chip can be suppressed.

Further, the projection 7 in the present embodiment is formed to be smaller than conventional. Because a main object of the projection 7 is not to forcibly break the chip as conventional, but to suppress collision between the chip and the projection 7 to suppress the deformation resistance of the chip. Therefore, it is possible to arrange at least one of the projections in the vicinity of the nose as shown in Fig. 3 where it is difficult to arrange the projection because of lack of a formation space in the conventional construction. The projection 7 can arrange its longitudinal axis on a bisector of the nose 4.

As described above, the chip is deformed in a convex shape along the top face 7a of the projection 7 in a cross section abreast of the cutting edges 4 and 5 which is a width direction. Here, since the top face 7a of the projection 7 is formed in a curved surface having a convex curve shape in the cross section, a contact range between the top face 7a of the projection 7 and the chip is limited to be small. Therefore, the contact between the chip and the top face 7a of the projection is reduced to further suppress the deformation resistance of the chip. The function of suppressing the deformation resistance of the cutting chip is further strengthened along with the function based upon the convex curve shape of the top face 7a of the projection 7 in a cross section in a direction vertical to the cutting edges 4 and 5 as described above.

Further, since the projection 7 formed in the concave portion 6 results in reinforcing the concave portion 6, a strength reduction of the cutting edges 4 and 5 due to the concave portion 6 can be prevented. Therefore, damages such as chipping or breaking of the cutting edges 4 and 5 can be prevented to prevent a reduction in cutting edge lifetime.

In addition, as described before, the concave portion 6 extending along the cutting edges 4 and 5 is formed in a circular shape to be adjacent to the inner periphery of the rake face 2 and make one round without disconnection. Further, a plurality of the projections provided in the concave portion 6 each are formed in a substantially elliptical shape having a longitudinal axis in a direction vertical to the cutting edges 4 and 5, and are arranged to be in parallel by equal intervals over an entire length of the concave portion 6 in the extending direction along the cutting edges 4 and 5. Therefore, the function of keeping the outflow direction of the chip to be in a constant direction, the function of suppressing the deformation resistance of the chip, and the function of preventing a reduction in cutting edge lifetime as described above, can be obtained in an entire region of the cutting edges 4 and 5. Therefore, a desired effect can be obtained regardless of a size of cut.

In addition, the rake face 2 extending from the cutting edges 4 and 5 is a flat inclined surface gradually inclined toward the center of the insert in the thickness direction as it goes away from the cutting edges 4 and 5, and is set to 10° as the inclined angle to a horizontal plane in parallel with the seat plane. In consequence, since the cutting performance of the cutting edges 4 and 5 is improved, the thickness of the chip gets thin and the flow of the chip on the rake face 2 can be promoted. Therefore, the inflow of the chip into the concave portion 6 and the contact of the chip with the top face 7a of the projection 7 are promoted to securely keep the flow direction to be in a constant direction. Further, by making the thickness of the chip be thin, the deformation resistance of the chip at the time of being deformed in a convex curve shape along the top face 7a of the projection is suppressed.

As viewed in a direction opposing the rake face 2, the projection 7 extends as the longitudinal axis in a direction substantially vertical to the cutting edges 4 and 5, and is formed such that a length of the projection 7 in a direction intersecting with, or at right angles to, the cutting edges 4 and 5 is larger than a width abreast of or in a direction in parallel with the cutting edges 4 and 5. That is, the projection 7 is formed to be longer in a direction along the outflow direction of the chip. Thereby since flow of the chip is restricted by the top face 7a of the projection 7, the function of keeping the outflow direction to be in a constant direction is further strengthened. On the other hand, since a width of the projection 7 in a direction abreast of the cutting edges 4 and 5 is small, the deformation resistance of the chip is suppressed. Further, since the projection 7 functions as a rib reinforcing the concave portion 6, a reduction in cutting edge strength due to a provision of the concave portion 6 can be effectively prevented. Accordingly damages such as chipping or breaking of the cutting edges 4 and 5 can be prevented to securely prevent a reduction in the cutting edge lifetime.

The projecting wall face 9 projects upward over the rake face 2 in a position backward of the concave portion 6 as viewed from the cutting edges 4 and 5. The chip, the outflow direction of which is kept to be in a constant direction by the projection 7, collides with a constant position of the projecting wall face 9 to stabilize deformation due to the collision. Therefore, the stable cutting chip processing can be obtained.

As explained above, since the cutting insert according to the present embodiment can suppress the deformation resistance of the chip by a novel construction regarding the concave portion and the projection, the vibration or chatter of the cutting insert or the cutting tool using it can be suppressed.

The present invention is not limited to the cutting insert explained above, and needless to say, additions, changes and elimination of appropriate constructions are possible within the scope without departing from the concept of the present invention. In addition, the present embodiment explains the cutting insert for cutting the outer periphery of the workpiece material, but the present invention can be applied to a cutting insert for cutting the inner periphery and the end face of the workpiece material. In addition, the present invention can be applied to a cutting insert used for cutting off/groove work. Other than that, the present invention can be applied to a cutting insert used for milling and drilling. Also in regard to the aspect of the cutting insert, the present invention can be applied not only to a negative insert but also to a positive insert. Also in regard to the configuration of the cutting edges 4 and 5, at least a part of the cutting edges 4 and 5 may be inclined to gradually go down in the thickness direction as it goes from one end portion to the other end portion. Alternatively the cutting edges 4 and 5 each may be formed in a curved shape to curve in the thickness direction of the insert body 1.

## Claims

1. A cutting insert comprising:
at least one cutting edge;
a rake face extending from the cutting edge;
a concave portion positioned adjacent to and backward of the rake face as viewed from the cutting edge; and
at least one projection projecting from a bottom face of the concave portion, wherein
an entirety of the projection is positioned closer to the bottom face of the concave portion than a surface formed by extending the rake face toward the concave portion,
at least a part of a top face of the projection is away from an extension surface of the rake face as it goes away from the cutting edge.

2. A cutting insert according to claim 1, wherein
the concave portion extends abreast of the cutting edge and a plurality of the projections are positioned over a substantially entire length of the concave portion along an extending direction of the concave portion.

3. A cutting insert according to claim 1 or 2, wherein
a part of the projection from an end portion in the insert outside direction to an intermediate portion thereof in a cross section intersecting with the cutting edge approaches the extension surface of the rake face as it goes away from the cutting edge

4. A cutting insert according to any of claim 1 to 3, wherein
in a cross section abreast of the cutting edge, the projection has the top face forming a convex curve toward an upward side.

5. A cutting insert according to any of claim 1 to 4, wherein
as viewed in a direction opposing the rake face, a length of the projection in a direction intersecting with the cutting edge is larger than a width of the projection in a direction abreast of the cutting edge.

6. A cutting insert according to any of claim 1 to 5, wherein
the cutting insert is provided with a projecting wall face projecting upward over a top portion of the projection at the backward of the concave portion as viewed from the cutting edge.

7. A cutting insert according to any of claim 1 to 6, wherein
the at least one projection is formed in a portion of the concave portion adjacent to a nose.
